## Europäisches Patentamt
## European Patent Office
## Office européen des brevets

(11) Publication number: **0 358 510**
A2

# EUROPEAN PATENT APPLICATION

(21) Application number: **89309091.0**

(51) Int. Cl.⁵: **B 29 C 67/14**

(22) Date of filing: **07.09.89**

(30) Priority: **09.09.88 GB 8821219**

(43) Date of publication of application:
**14.03.90 Bulletin 90/11**

(84) Designated Contracting States: **DE FR GB IT**

(71) Applicant: **BRITISH AEROSPACE PUBLIC LIMITED COMPANY**
**11 Strand**
**London WC2N 5JT (GB)**

(72) Inventor: **Smith, Nigel Nicholas**
**British Aerospace (Dynamics) Ltd. Six Hills Way**
**Stevenage Herts SG1 2AS (GB)**

**McCaul, Terence Patrick**
**British Aerospace (Dynamics) Ltd. Six Hills Way**
**Stevenage Herts SG1 2AS (GB)**

(74) Representative: **Dowler, Edward Charles et al**
**British Aerospace PLC Corporate IPR Department**
**Brooklands Road**
**Weybridge Surrey, KT13 OSJ (GB)**

(54) Apparatus and method for making composite materials.

(57) This invention relates to apparatus and a method for consolidating components of composite materials, specifically to reinforced thermoplastic or thermoset type materials with fibre reinforcement.

**Description**

## APPARATUS AND METHOD FOR MAKING COMPOSITE MATERIALS

This invention relates to apparatus and a method for consolidating components of composite materials, specifically to reinforced thermoplastic or thermoset type materials with fibre reinforcement.

One method by which components may be made is to lay fibres and thermoplastic materials over a mould, then to cover the mould with a similarly shaped, say rubber, cover that is sealed around the edges. The air between the cover and the mould is removed by a vacuum pump so that the cover makes a very close fit with the mould. The mould etc., is then placed in an autoclave and the required temperatures and pressures are maintained to achieve melting and subsequent moulding of the thermoplastic material. This method is both costly and time consuming due mainly to the running of the autoclave.

A further method for fabricating thermoplastic components is to use matched metal moulds, and apply pressure so that the two halves of the mould are forced together thereby moulding the thermoplastic. However, with a three dimensional component it is very difficult to achieve compression and therefore moulding of the thermoplastic, in all three dimensions. Another disadvantage of this method is that the matched metal moulds have to be machined to a very high accuracy. This increases the cost of the method and is time consuming.

The above methods are further limited in that they can only produce flat or low aspect ratio components.

One object of the present invention is to provide a simple method for consolidating a three dimensional composite material component with none of the limitations of the previous methods, and that is usable for consolidating high aspect ratio components.

According to one aspect of the present invention there is provided a method of mailing a moulded plastics article in which plastics material is placed adjacent to a mould surface, an impervious flexible sheet is laid over the plastics material and then the plastics material is subjected to heat whilst maintaining the pressure over said sheet higher than between the sheet and the mould surface to press the plastics material against the mould surface, characterised in that, to avoid the need for an oven in which a pressure can be maintained, (an autoclave), said moulding is done in a hollow member a first part of which defines a mould surface and a second part of which comprises a cover for sealing an opening in the first part, said plastics material being laid against the mould surface, said sheet being laid over the plastics material, and a higher than ambient gas pressure being applied only within the member between the sheet and the cover member whilst the hollow member with the plastics material therein is heated, for example in an unpressurised oven.

According to a second aspect of the present invention there is provided a method for fabricating a composite material component comprising:-

making a mould of the component;
laying-up said composite material on the surface of said mould;
covering said composite material with a vacuum bag and further sealing said mould with a top plate;
in which method the air between the composite material and the vacuum bag is removed, thereby generating a vacuum; and further in which the sealed mould is heated in an oven and a gas pressure is applied to the area between the top plate of said mould and said vacuum bag.

According to a third aspect of the present invention there is provided apparatus for fabricating a composite material component comprising:-
a sealable mould onto which a lay-up of said composite material may be applied, a vacuum bag which covers said composite material and is sealed when the mould is sealed such that the air between said composite material and said vacuum bag may be removed in order to generate a vacuum, in which said apparatus may be heated in an oven and a gas pressure may be applied to the area between the top seal of the mould and said vacuum bag.

Preferably said composite material comprises a thermoplastic type material, or a thermoset type material, and further comprises reinforcing fibres.

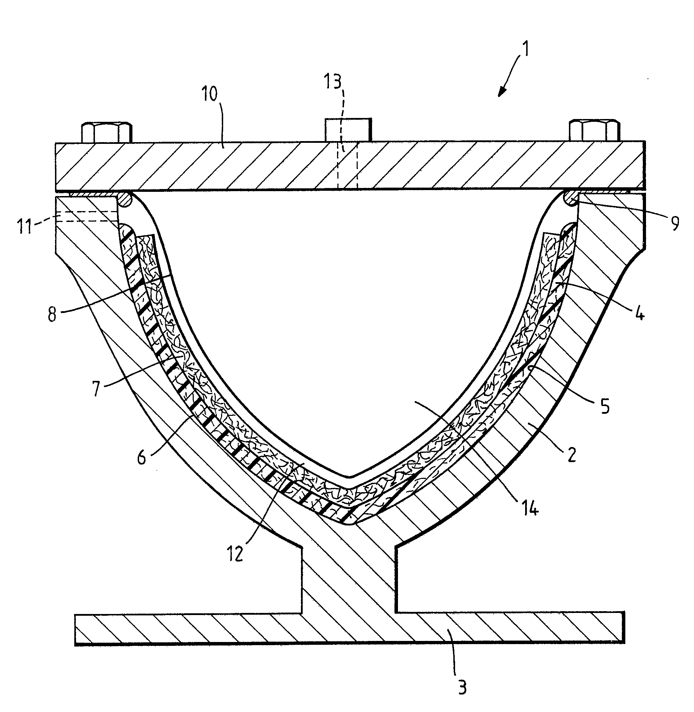

Reference will now be made by way of example to the accompanying diagrams, the single figure of which is a diagram of a tool for making thermoplastic components.

The illustrated tool 1 comprises a mould 2 supported by a stand 3, both of which are machined from steel and chromed to prevent rusting. The shape of mould 2 defines the external surface of the required component.

A lay-up 4 comprising glass fibres and thermoplastic material is applied to surface 5 of the mould 2. In this case glass fibres are for reinforcement of the component. A release film 6 and a breather 7 are placed on top of the lay-up 4. The release film 6 is a plastic with perhaps a PTFE base and prevents the breather 7 which is a chopped glass strand mat from sticking to the lay-up 4 when the thermoplastic is melted.

A vacuum bag 8 is then placed over the top of the breather 7 and is sealed by the sealant tape 9 and the top plate 10 of the mould. The air in the area 12 between the vacuum bag 8 and the lay-up 4 is removed via outlet 11 by a vacuum pump (not shown). The breather 7 allows a uniform vacuum to be produced over the whole of area 12.

Once all the air has been removed from area 12, the whole tool 1 is placed in an oven, which is heated to a temperature that melts the thermoplastic material. Nitrogen gas is passed through inlet 13 so that pressure builds up in area 14. The combination of temperature and pressure melts the thermoplastic and moulds it into the required shape. The tool 1 may be removed from the oven and the pressure released when the temperature is less than the melting point of lay-up 4 and the component may be removed.

Typical processing temperatures and pressure depend upon the material to be moulded and are respectively in the ranges of about 100-500°C and 400-600 x10³ Pa.

It should be noted that any thermoplastic component, be it reinforced or not, may be made by this method.

It should also be noted that the pressure in area 14 may be generated by any suitable inert gas other than Nitrogen.

It will be appreciated that different fibres, for example only, carbon fibres or in fact no fibres, may be used instead of glass fibres.

It will further be appreciated by those skilled in the art that this invention may relate to thermosets rather than thermoplastics, in which case it may not be necessary to put the tool 1 in the oven.

## Claims

1. A method of making a moulded plastics article in which plastics material is placed adjacent to a mould surface, an impervious flexible sheet is laid over the plastics material and then the plastics material is subjected to heat whilst maintaining the pressure over said sheet higher than between the sheet and the mould surface to press the plastics material against the mould surface, characterised in that, to avoid the need for an oven in which a pressure can be maintained, (an autoclave), said moulding is done in a hollow member a first part of which defines a mould surface and a second part of which comprises a cover for sealing an opening in the first part, said plastics material being laid against the mould surface, said sheet being laid over the plastics material, and a higher than ambient gas pressure being applied only within the member between the sheet and the cover member whilst the hollow member with the plastics material therein is heated, for example in an unpressurised oven.

2. A method for fabricating a composite material component comprising:-
making a mould of the component;
laying-up said composite material on the surface of said mould;
covering said composite material with a vacuum bag and further sealing said mould with a top plate;
in which method the air between the composite material and the vacuum bag is removed, thereby generating a vacuum, and further in which the sealed mould is heated in an oven and a gas pressure is applied to the area between the top plate of said mould and said vacuum bag.

3. A method according to Claim 2, wherein said composite material comprises a thermoplastic type material.

4. A method according to Claim 2, wherein said composite material comprises a thermoset type material.

5. A method according to any one of Claims 2, 3 or 4, wherein said composite material further comprises reinforcing fibres.

6. A method according to Claim 5, wherein said fibres are glass fibres.

7. A method according to Claim 5, wherein said fibres are carbon fibres.

8. A method according to any one of the preceding claims, wherein a layer of film and a breather layer are placed between said composite material and said vacuum bag.

9. A method according to any one of the preceding claims, wherein said gas pressure is of the order of 500x10³ Pa.

10. Apparatus for fabricating a composite material component comprising a sealable mould onto which a lay-up of said composite material may be applied, a vacuum bag which covers said composite material and is sealed when the mould is sealed such that the air between said composite material and said vacuum bag may be removed in order to generate a vacuum, in which said apparatus may be heated in an oven and a gas pressure may be applied to the area between the top seal of the mould and said vacuum bag.

11. Apparatus according to Claim 10, wherein said composite material comprises a thermoplastic type material.

12. Apparatus according to Claim 10, wherein said composite material comprises a thermoset type material.

13. Apparatus according to any one of Claims 10, 11 or 12, wherein said composite material further comprises reinforced fibres.

14. Apparatus according to Claim 13, wherein said reinforced fibres comprise glass fibres.

15. Apparatus according to Claim 13, wherein said reinforced fibres comprise carbon fibres.

16. Apparatus according to any one of Claims 10 to 15, wherein a film layer and a breather layer exist between said composite material and said vacuum bag.

17. Apparatus according to any one of Claims 10 to 16, wherein said gas pressure is of the order of 500x10³ Pa.

18. A method for fabricating a composite material substantially as hereinbefore described with reference to, and as illustrated in, the accompanying drawings.

19. Apparatus for fabricating a composite material substantially as hereinbefore described with reference to, and as illustrated in, the accompanying drawings.